**Europäisches Patentamt**

**European Patent Office**

**Office européen des brevets**

(11) Veröffentlichungsnummer: **0 229 903**
**B1**

(12) **EUROPÄISCHE PATENTSCHRIFT**

(45) Veröffentlichungstag der Patentschrift:
**31.01.90**

(21) Anmeldenummer: **86115335.1**

(22) Anmeldetag: **05.11.86**

(51) Int. Cl.⁴: **B60H 1/00, B60H 1/26**

(54) **Belüftungsvorrichtung.**

(30) Priorität: **15.11.85 DE 3540546**

(43) Veröffentlichungstag der Anmeldung:
**29.07.87 Patentblatt 87/31**

(45) Bekanntmachung des Hinweises auf die Patenterteilung:
**31.01.90 Patentblatt 90/5**

(84) Benannte Vertragsstaaten:
**AT BE CH DE ES FR GB IT LI LU NL SE**

(56) Entgegenhaltungen:
**EP-A- 0 164 532**
**DE-A- 3 003 224**
**DE-A- 3 316 823**
**FR-A- 2 543 664**
**GB-A- 2 057 756**

(73) Patentinhaber: **Farmont Produktion GmbH & Co. KG,
Heerdter Lohweg 61, D-4000 Düsseldorf 11(DE)**

(72) Erfinder: **Farmont, Rolf, Dr., Hortensienstrasse 17,
D-4000 Düsseldorf 30(DE)**

(74) Vertreter: **Schumacher, Horst, Dr. Dipl.-Phys.,
Frühlingstrasse 43 (Ecke Holunderweg),
D-4300 Essen 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Belüftungsvorrichtung für ein Fahrzeugdachfenster, insbesondere für ein heb- und/oder schiebbares Sonnendach, gemäß Oberbegriff von Anspruch 1.

Fahrzeuge, die sich nicht oder nur in langsamer Fahrt befinden, werden bei Windstille oder lediglich schwach wehenden Winden durch vorbeitstreichende Luftmassen nicht gekühlt; ihr Innenraum heizt sich dann, vor allem bei starker Sonnenlichteinstrahlung schnell auf. Diese Aufheizung belastet den Organismus des Fahrgastes und kann auch durch Öffnen der Fenster im Fahrzeugdach nicht wesentlich verringert werden. Unter dem Fahrzeugdach wird hier der ganze mit Fensterflächen versehene Aufbaubereich des Fahrzeuges und insbesondere die im wesentlichen horizontale Dachfläche verstanden. Eine gewisse Abhilfe kann bei solchen Aufheizungen durch ein Lüftergebläse gewährleistet werden. Diese Lüftergebläse haben aber aufgrund der sehr begrenzten Querschnittsdimensionen der Lüftungskanäle, durch die vergleichsweise große Luftmengen transportiert werden müssen, den Nachteil hohen Stromverbrauches, was die üblichen als Energiequelle dienenden Akkumulatorbatterien stark belastet. Bei stillstehendem Fahrzeugantrieb, wenn die Akkumulatorbatterien also nicht nachgeladen werden, können diese Lüfter nicht im Dauerbetrieb arbeiten. Außerdem haben solche Lüftergebläse den Nachteil, lokale Zugluft zu erzeugen, da die Luftaustritte aus den Lüfterkanälen zwangsweise punktuell im Fahrzeug angeordnet sind - oder es müssen sehr viele Lüfteraustritte vorgesehen sein, was Schwierigkeiten beim Verlegen der Lüfterkanäle sowie hohe Investitionskosten verursacht.

Bei Wohnwagen sind in der Dachebene zwangbelüftete Dachluken vorgesehen, die in ihrer Geschlossen-Stellung über verdeckt angeordnete Lüftungsschlitze im Rahmen oder im haubenförmigen Deckel einen permanenten Luftaustausch gestatten. Um bei solchen Dachluken für Wohnwagen den Luftaustausch in der Geschlossen-Stellung der Dachluke zu verbessern, ist in der DE-OS 30 03 224 ein motorisch angetriebener Lüfter vorgeschlagen worden, der im Bereich der nicht verschließbaren Öffnung für Permanentlüftung in die öffenbare Haube der Dachluke integriert ist. Eine solche Haube ist in der Regel doppelschalig aufgebaut, besteht also aus einer Deckel- und einer Boden-Schale, so daß der Wärmeisoliereffekt einer Doppelverglasung erreicht wird. Dabei bildet entweder der Zwischenraum zwischen beiden Schalen den Permanentlüftungskanal, oder die Permanentlüftung erfolgt über besondere Lüftungsschlitze am Haubenrand, der mit dem Lukenrahmen eine spritzwasserdichte Süll-Konstruktion bildet. Bei dieser bekannten, in ihrer Geschlossen-Stellung aktiv zwangsbelüfteten Dachluke ist der Lüfter an der öffenbaren Dachhaube selbst befestigt - und zwar am Haubendeckel, wenn die Zwangsbelüftungsluft zwischen dem Haubendeckel und dem Haubenboden geführt wird, oder am Haubenboden, wenn ein umlaufender haubenrandseitiger Lüftungskanal vorgesehen ist. Im ersteren Fall funktioniert die aktive Zwangsbelüftung nur in Verbindung mit einer doppelschaligen Dachhaube, im zweiten Fall müssen die Lüfterschaufeln an langen Streben durch den umlaufenden Belüftungskanal geführt werden, welcher deshalb kreisförmig ausgebildet sein muß. In beiden Fällen wird nur bei geschlossener Dachhaube eine hinreichende aktive Zwangsbelüftung des Fahrzeuges erreicht, weil bei geöffneter Dachhaube entweder die erforderliche hohen Luftgeschwindigkeiten im Luftansaugkanal zum überwiegenden Ansaugen von Außenluft führen (im ersteren Fall) oder weil die in Lukenrandnähe arbeitenden Lüfterschaufeln im Bereich der Außenluft selbst wirksam werden. Bei offenstehender Dachluke wird also lediglich die lukennahe Außenluft im Lukenbereich selbst umgewälzt, ohne daß der Fahrzeuginnenraum selbst be-oder entlüftet wird. Dieser Nachteil wird bei der aus der DE-OS 30 03 224 bekannten Belüftungsvorrichtung in Kauf genommen, weil es sich dort um in der Geschlossen-Stellung permanent belüftete Dachhauben für Wohnwagen handelt. Ein weiterer Nachteil dieser bekannten Dachhauben ist der Stromverbrauch des Lüftermotors, der allerdings im Energieverbrauchsplan eines Wohnwagens mit einkalkuliert sein kann.

Aus der DE-OS 2 943 970 ist eine andere, gattungsgemäße Belüftungsvorichtung für zwangsbelüftete Dachluken der vorerwähnten Art bekannt, bei denen ein aus einem Lüftermotor und einem Lüfterrad bestehender Ventilator an einer ortsfesten Befestigungsstrebe angeordnet ist; die Befestigungsstrebe besteht aus hohlen, nach außen hin sich verjüngenden Armen, durch die die vom Ventilator ausgestoßene Luft Lüftungsschlitzen am Dachlukenrand zugeführt wird. Diese Luftführung erfordert einen relativ starken Lüftermotor und erzeugt in der Nähe des Lüfterrades relativ hohe Luftgeschwindigkeiten, die dort als Zugluft empfunden werden; außerdem ist die Befestigungsvorrichtung für heb- und/oder schiebbare Sonnendächer für Fahrzeuge nicht verwendbar, da Sonnendächer für Fahrzeuge in ihrer Geschlossen-Stellung wegen der scheibenförmigen Deckelplatten keine Zwangsentlüftungsschlitze aufweisen können.

Davon ausgehend liegt der Erfindung die Aufgabe zugrunde, eine gattungsgemäße Belüftungsvorrichtung so zu gestalten, daß die Lüftungswirkung bei offenstehendem, insbesondere einfach verglastem, Fenster, insbesondere einem heb- und/oder schiebbaren Sonnendach, verbessert wird.

Erfindungsgemäß wird diese Aufgabe durch die Merkmale des Anspruches 1 gelöst. Bevorzugt ist eine solche Befestigungsstrebe an dem Rahmen des Fahrzeugdachfensters festlegbar.

Bei einem "Lüfter" im Sinne der Erfindung handelt es sich zumindest um das den Belüftungsstrom antreibende Element, z.B. ein Flügel aufweisendes, motorisch antreibbares Lüfterrad. Der Lüftermotor selbst kann grundsätzlich zwar an gesonderter Stelle im Fahrzeugdach angeordnet sein und z.B. das Lüfterrad durch Transmission antreiben, bevorzugt treibt der Lüftermotor den Lüfter aber direkt, also ohne jegliche Transmission, an und wird mit dem Lüfter gemeinsam von der Befestigungsstrebe in der gewünschten Lage der Fensteröffnung gehalten.

Durch die Erfindung werden u.a. folgende Vorteile erreicht:

- Es wird eine von der konkreten Öffnungsstellung des lichtdurchlässigen Deckels im wesentlichen unbeeinflußte Lüftungswirkung erzielt;
- der Deckel kann, wie jeder bekannte Fensterdeckel, in beliebiger Weise verschwenkt und/oder verschoben und/oder abgenommen werden, ohne durch das Vorhandensein des Lüfters behindert zu sein, was vor allem für heb- und/oder schiebbare Sonnendächer wegen der begrenzten Platzverhältnisse von besonderer Bedeutung ist;
- bei der Anwendung der Belüftungsvorrichtung in Verbindung mit einem, insbesondere einfach verglasten, heb- und/oder schiebbaren Sonnendach wird erstmals auch dann eine Klimaverbesserung bei offenstehendem Sonnendach erreicht, wenn dieses nicht durch Außenluft angeströmt wird;
- durch die Ausbildung des Tragelementes in Form von mindestens einer Befestigungsstrebe wird eine gute Luftzirkulation gewährleistet, wobei düsenähnliche Luftdurchtrittsöffnungen zwischen mehreren, eine Baueinheit bildenden Befestigungsstreben die gewünschte Luftzirkulation fördern - dabei wird das Entstehen von Zugluft vermieden, weil die gesamte Fensteröffnung zum Luftaustausch zur Verfügung steht; es ist auch möglich, daß die Befestigungsstrebe eine gitterähnliche Struktur hat, die maximal sogar die gesamte Fensteröffnung ausfüllen kann;
- die Befestigungsstrebe mit dem von ihr getragenen Lüfter kann als komplette Einheit in die Fensteröffnung, insbesondere auch lösbar, eingesetzt werden, so daß sie sich sowohl zum einfachen Entfernen als auch zum Nachrüsten eignet und die übliche Fensterfunktion, insbesondere hinsichtlich des Lichtdurchlasses so gut wie nicht beeinträchtigt.

Dadurch, daß die Energiequelle für den Lüftermotor mindestens eine an dem Fahrzeugaufbau angeordnete, bevorzugt an der mindestens einen Befestigungsstrebe festgelegte, Solarzelle ist, wird die erwünschte Lüftungswirkung gegenüber bekannten Belüftungsvorrichtungen ganz entschieden verbessert: Bei starker Sonnenlichteinstrahlung ist der Zwangsbelüftungsbedarf nämlich besonders groß; in dieser Situation steht für den Lüftermotor relativ mehr elektrische Energie zur Verfügung als bei geringerer Sonnenlichteinstrahlung, bei der auch der Zwangsbelüftungsbedarf geringer ist. Durch die Verwendung von Solarzellen wird also eine von besonderen Schaltern oder Sensoren zur Temperaturmessung oder dgl. unabhängige, selbsttätige Regelung des Belüftungsstromes erreicht. Z.B. kann sich ein solarelektrisch angetriebenes Lüfterrad bei relativ stärkerer Sonnenlichteinstrahlung und entsprechend höherer Fahrzeugaufheizung schneller als bei geringerer Sonnenlichteinstrahlung und entsprechend geringerer Fahrzeugaufheizung drehen. Ein weiterer, ganz wesentlicher Vorteil dieser solarelektrisch betriebenen Belüftungsvorrichtung ist die Unabhängigkeit von irgendeiner Energiequelle des Fahrzeuges, insbesondere der Akkumulatorbatterien, so daß die Belüftungsvorrichtung im Dauerbetrieb auch dann arbeiten kann, wenn die Akkumulatorbatterie, wie bei Motorstillstand, nicht nachgeladen wird. Besonders vorteilhaft ist die Anordnung der mindestens einen Solarzelle auf der mindestens einen Befestigungsstrebe, die auch den Lüfter trägt; diese Anordnung erleichtert den Einbau, insbesondere beim Nachrüsten, in die Fensteröffnung und das Entfernen der Belüftungsvorrichtung bei Nichtbedarf - z.B. in der kalten Jahreszeit -, weil weder eine Verkabelung noch eine gesonderte Anbringung der Solarzellen erforderlich ist. Darüber hinaus wird aber auch ein lüftungstechnischer Vorteil erzielt, weil die mindestens eine Solarzelle an der Stelle angeordnet ist, an der die meiste sonnenlichtbedingte Wärmeenergie in das Fahrzeuginnere gelangt, nämlich an einer unmittelbar vom Sonnenlicht bestrahlten, insbesondere einfach verglasten, Fensterfläche. Durch die Anordnung der mindestens einen Solarzelle hinter dieser Fensterfläche wird einerseits das "Regelungsverhalten" der Belüftungsvorrichtung verbessert, weil der Lüftermotor um so mehr Energie erhält, je unmittelbarer sich die Sonnenlichteinstrahlung auf das Fahrzeuginnere auswirkt. Andererseits wird dadurch auch ein besonders günstiger Anbringungsort für die Solarzellen geschaffen, da sie witterungsgeschützt sind und gleichwohl einen guten Wirkungsgrad haben. - Es versteht sich, daß eine gattungsgemäße Belüftungsvorrichtung bei Verwendung von mindestens einer am Fahrzeugdach, insbesondere in der Fensteröffnung des belüfteten Fensters angeordneten Solarzelle auch dann sehr große Belüftungsvorteile bringt, wenn das Tragelement für den Lüfter an dem lichtdurchlässigen Deckel selbst festgelegt ist, wie z.B. bei den eingangs beschriebenen Dachlukenhauben.

Grundsätzlich können alle bekannten Solarzellen für die erfindungsgemäße Belüftungsvorrichtung verwendet werden, wobei auf eine genauere Beschreibung der Solarzellen verzichtet werden kann, weil diese hinlänglich bekannt sind. Als besonders vorteilhaft haben sich Solarzellen oder Solarzellenanordnungen erwiesen, die eine im Vergleich zur Länge und Breite ihrer lichtempfindlichen Fläche geringe Dicke aufweisen; dies kann z.B. durch Zusammenbau einer Vielzahl von Solarzellen zu einer relativ dünnen Platte erfolgen. Die lichtempfindliche Fläche der mindestens einen Solarzelle ist vorzugsweise parallel zur Ebene der Fensteröffnung im Bereich der Fensteröffnung selbst angeordnet. Durch eine Anordnung der mindestens einen Solarzelle zwischen dem lichtdurchlässigen Deckel und der mindestens einen Befestigungsstrebe kann die Solarzelle verdeckt - für die Fahrzeuginsassen - eingebaut werden.

Wenn (gemäß Anspruch 4) an der mindestens einen Befestigungsstrebe mindestens eine Strahlungsschutzblende für die Fensteröffnung festlegbar ist, kann hierdurch der Lüftungsstrom konzentriert werden. Die die Fensteröffnung teilweise verlegenden Strahlungsschutzblenden tragen auch dazu bei, daß der von dem Lüfter beschleunigte Luftstrom auch in besonders fensterferne Bereiche des Fahrgastraumes gelangt, weil er den Umluftanteil im fensternahen Bereich vermindert. Als besonders wirkungsvoll hat sich die Anordnung der Befestigungsstrebe etwa in der Mitte der Fensteröffnung erwiesen. Am besten ist eine Befestigungsstrebe geeignet, wie sie aus der europäischen Patentanmeldung 85 104 805 bekannt ist.

Gemäß einer anderen Weiterbildung der Erfindung ist die Energiezufuhr zu dem Lüftermotor auch unabhängig vom üblichen Lüftungsbedarf ein- und ausschaltbar, z.B. wenn das Fahrzeug längere Zeit nicht benutzt wird oder das Fahrzeugdachfenster luftdicht geschlossen bleibt und keine Zwangsbelüftungsschlitze aufweist. Bei Verwendung von Solarzellen als Energiequelle kann durch wahlweises Verbinden des Lüftermotors mit dem elektrischen Bordnetz des Fahrzeuges im Bedarfsfall eine von der Sonnenlichteinstrahlung unabhängige Zwangsbelüftung erreicht werden.

Zweckmäßige Ausgestaltungen des Erfindungsgegenstandes, die insbesondere eine gute Lüftungswirkung bei einfacher Einbaumöglichkeit und in Verbindung mit einer optisch ansprechenden Gestaltung gewährleisten, sind in weiteren Ansprüchen enthalten.

Die vorgenannten, erfindungsgemäß zu verwendenden Bauteile unterliegen in ihrer Größe, Formgesteltung, Materialauswahl und techischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der eine bevorzugte Ausführung einer erfindungsgemäßen Belüftungsvorrichtung dargestellt ist. In der Zeichnung zeigen:

Fig. 1 eine Belüftungsvorrichtung in Ansicht von außerhalb des Fahrzeug - Ansicht A gemäß Fig. 2;

Fig. 2 dieselbe Belüftungsvorrichtung im Schnitt entlang der Linie II-II gemäß Fig. 1 sowie

Fig. 3 dieselbe Belüftungsvorrichtung in Einbaulage in einem hebbaren Fahrzeugsonnendach in Innenansicht - Ansicht B gemäß Fig. 2.

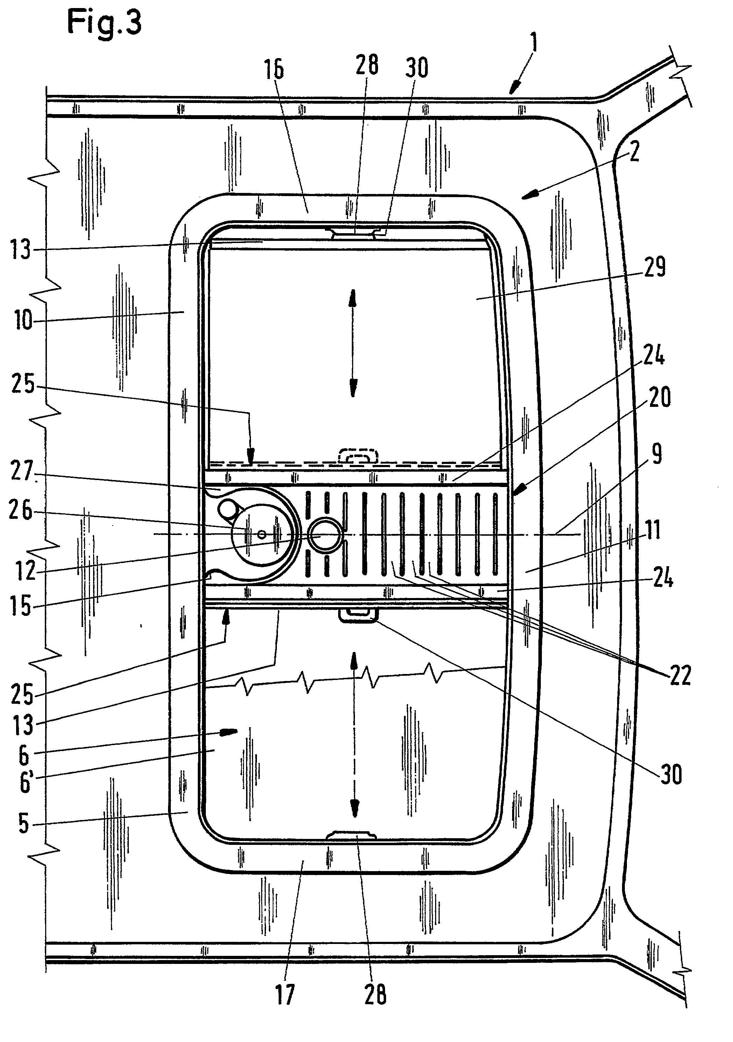

Im Dach eines Fahrzeugaufbaues 1 ist - gemäß Fig. 3 - eine Fensteröffnung (Dachöffnung) mit Sonnendach 2 vorgesehen, welches am Öffnungsrand der Dachöffnung mittels eines Rahmens 5 abgestützt ist und einen hinten hebbaren lichtdurchlässigen, scheibenförmigen Deckel 6 aufweist. Beidseitig der in Fahrtrichtung weisenden Mittellinie 9 des Sonnendaches 2 erstreckt sich in Fahrtrichtung ein Tragelement 20, welches entweder einstückig mit dem Rahmen 5 gebildet ist, oder als kompaktes Einbauelement zwischen die frontseitige und hintere Rahmenstrebe 11,10 einsetz- und befestigbar ist. Dies geschieht bevorzugt mittels einer lösbaren Rastverbindung mit den betreffenden Rahmenstreben. Das Tragelement 20 besteht zum einen aus zwei beidseitig der Mittellinie 9 seitlich einer Betätigungsvorrichtung 26 für das Öffnen und Schließen des Deckels 6 sich erstreckenden Befestigungsstreben, die als oben offene Gehäuseschalen ausgebildet sind und Rollovorrichtungen 25 zum seitlichen Ausziehen aufnehmen. Die aufwickelbaren Strahlungsschutzblenden 29 der Rollovorrichtungen 25 weisen an ihrer freien Längskante 13 Ösen 30 auf, mittels denen die Strahlungsschutzblenden an den seitlichen Rahmenstreben 16 bzw. 17 des Rahmens 5 in hakenförmige Befestigungselemente 28 einhängbar sind.

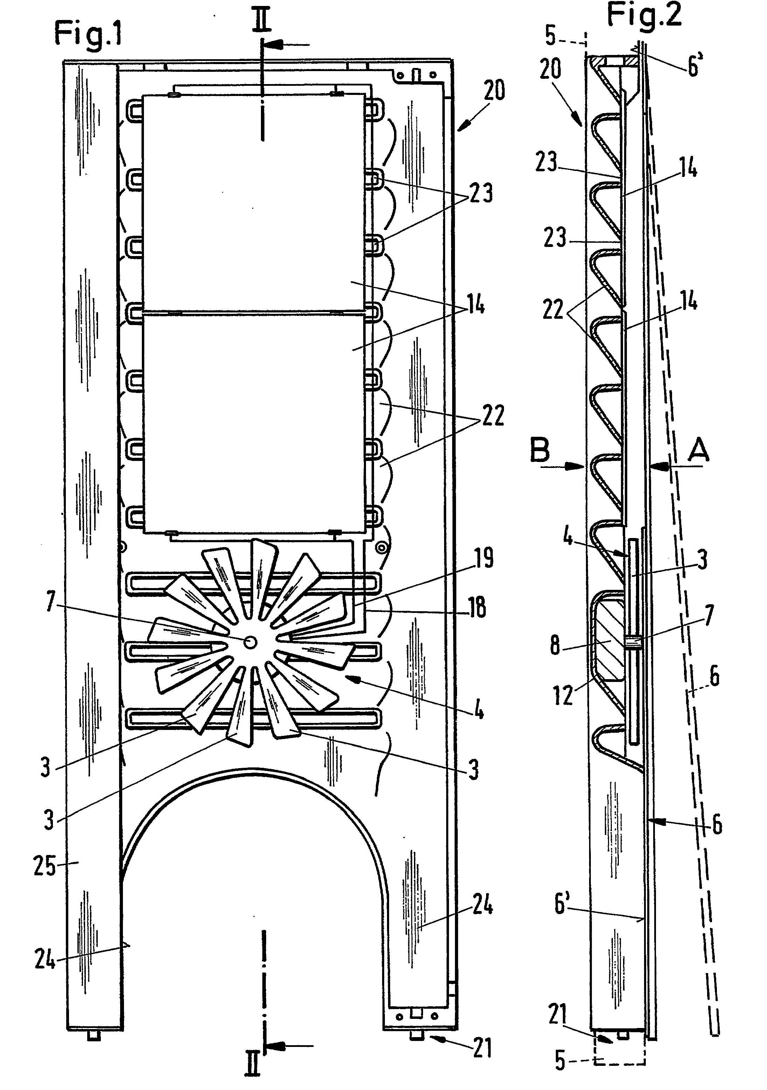

Senkrecht zu den Befestigungsstreben 24 des Tragelementes 20 erstrecken sich weitere Befestigungsstreben 22, die parallel zu einander angeordnet sind und zwischen sich schlitzförmige Lüftungsöffnungen 23 freilassen. Im Bereich der an Haltesockeln 15 mit dem Rahmen 5 verbundenen Betätigungsvorrichtung 26 für den Deckel 6 ist eine großflächige Ausnehmung 27 zwischen den Befestigungsstreben 24 einerseits und den Befestigungsstreben 22 andererseits vorgesehen, damit der Deckel 6 ohne Behinderung durch das Tragelement 20 geöffnet und geschlossen werden kann. Das Tragelement 20 weist also eine gitterähnliche, ebene Struktur auf, die sich parallel zur Fensteröffnung und innerhalb des Fensterrahmens erstreckt. Der Deckel selbst ist eine im wesentlichen ebene lichtdurchlässige, in der Regel leicht gewölbte Platte ohne wesentliche randseitige Überstände. In seiner Geschlossen-Stellung liegt der Deckel dicht am Rahmen 5 an, so daß weder Feuchtigkeit noch Luft durch die Dachöffnung treten können, dann befindet sich der Deckel unmittelbar oberhalb des Tragelementes 20, wie in Fig. 2 mit ausgezogener Linie dargestellt. In seiner Offen-Stellung, die in Fig. 2 gestrichelt dargestellt ist, kann ein Luftaustausch zwischen dem Fahrzeuginnenraum und der Außenwelt erfolgen - soweit ist das Tragelement 20 mit seinen Rollovorrichtungen 25 sowie das Sonnendach 2 aus der EP-Patentanmeldung 85 104 805 bekannt.

Das Tragelement 20 trägt einen motorisch angetriebenen Lüfter, der aus einem Flügel 3 aufweisenden Lüfterrad 4 besteht. Dieses sitzt drehfest auf der Antriebswelle 7 eines elektrisch antreibbaren, flach gebauten Lüftermotors 8, der in einer von den Befestigungsstreben 22 gebildeten Mulde 12 befestigt ist.

Das Tragelement 20 trägt - ebenfalls auf seiner dem Deckel 6 zugewandten Seite zwei flächige Solarzellenanordnungen 14, in denen jeweils mehrere, nicht einzeln dargestellte, da an sich bekannte Solarzellen zu einer Solarbatterie zusammengefaßt sind, deren lichtempfindlichen Flächen zum lichtdurchlässigen Deckel (6) hinweisen. Strombahnen 18,19 stellen eine elektrisch leitende Verbindung zum Lüftermotor 8 her. Auf diese Weise stellt die in Fig. 1 und 2 dargestellte Belüftungsvorrichtung eine kompakte, autark arbeitende, lösbar in den Rahmen 5 einsetzbare einteilige Baugruppe dar.

Die Flügel 3 des Lüfterrades 4 können lichtdurchlässig sein, um den Durchtritt von flimmerndem Licht durch die Lüftungsöffnungen zu vermeiden. Der Deckel 6 weist durch einen an sich bekannten Aufdruck 6' oder dgl. eine verminderte Lichtdurchlässigkeit auf, der im Bereich der Solarzellenanordnungen 14 fortgelassen ist, um eine möglichst hohe Energieausbeute zu gewährleisten. Hierdurch wird bei entsprechender Bemessung der lichtdurchlässigeren Deckelfläche der optische Gesamteindruck des Deckels nicht beeinträchtigt, da sich die lichtdurchlässigere Fläche oberhalb des Tragelementes und der Solarzellenanordnung befindet und vom Fahrgastraum nicht erkennbar ist.

Zur rahmenseitigen Befestigung des Tragelementes 20 ist dieses mit an sich bekannten, stirnseitig angeordneten Rastelementen 21 ausgestattet. Zur Abdeckung der in Fig. 1 der Übersichtlichkeit halber nicht dargestellten und an sich bekannten Rollovorrichtungen können die Befestigungsstreben 24 fensterseitig eine Abdeckplatte 25 aufweisen.

## Patentansprüche

1. Belüftungsvorrichtung für ein einen zwischen mindestens einer Offen- und einer Geschlossen-Stellung verstellbaren lichtdurchlässigen Deckel (6) aufweisendes Fahrzeugdachfenster, bestehend aus mindestens einem motorisch angetriebenen Lüfter (8, 4), mindestens einer Befestigungsstrebe (20; 22, 24) zum Anordnen des Lüfters auf der Fahrzeuginnenseite des Deckels innerhalb der Projektion der das Fahrzeugdachfenster aufnehmenden Dachöffnung und einer Energiequelle (14) für den Lüftermotor (8), dadurch gekennzeichnet, daß die Energiequelle mindestns eine Solarzelle ist und daß die mindestens eine Solarzelle zwischen dem lichtdurchlässigen Deckel (6) und der mindestens einen Befestigungstrebe (20; 22, 24) angordnet ist.

2. Belüftungsvorrichtung nach Anspruch 1, dadurch gekennzeichnet, daß die mindestens eine Solarzelle an der mindestens einen Befestigungsstrebe (20; 22, 24) festgelegt ist.

3. Belüftungsvorrichtung nach Anspruch 1 oder 2, dadurch gekennzeichnet, daß die mindestens eine Befestigungsstrebe (20; 22, 24) eine gitterähnliche, Lüftungsöffnungen (23) bildende, ebene Struktur aufweist.

4. Belüftungsvorrichtung nach Anspruch 1 bis 3, dadurch gekennzeichnet, daß an der mindestens einen Befestigungsstrebe (20; 22 24) mindestens eine Strahlungsschutzblende (29) festlegbar ist.

5. Belüftungsvorrichtung nach Anspruch 4, dadurch gekennzeichnet, daß die Strahlungsschutzblende (29) auf eine Rollovorrichtung (25) aufwickelbar ist.

6. Belüftungsvorrichtung nach einem der Ansprüche 1 bis 5, dadurch gekennzeichnet, daß die mindestens eine Befestigungsstrebe (20; 22, 24) und der mindestens eine Lüfter (3, 4) eine an dem Fahrzeugaufbau (1) lösbar befestigbare einteilige Baugruppe bilden.

7. Belüftungsvorrichtung nach einem der Ansprüche 1 bis 6, dadurch gekennzeichnet, daß die Lichtdurchlässigkeit des lichtdurchlässigen Deckels (6) im Bereich der mindestens einen Solarzelle größer als in den übrigen Bereichen des Deckels (6) ist.

8. Belüftungsvorrichtung nach einem der Ansprüche 1 bis 7, dadurch gekennzeichnet, daß die Energiezufuhr zu dem Lüftermotor (8) ein- und ausschaltbar ist.

9. Belüftungsvorrichung nach einem der Ansprüche 1 bis 8, dadurch gekennzeichnet, daß der Lüftermotor (8) wahlweise mittels elektrischer Energie aus dem Bordnetz des Fahrzeuges antreibbar ist.

10. Belüftungsvorrichtung nach einem der Ansprüche 1 bis 9, dadurch gekennzeichnet, daß die Befestigungsstrebe (20; 22, 24) in der Längsmitte der Fensteröffnung angeordnet ist.

11. Belüftungsvorrichtung nach einem der Ansprüche 1 bis 10, dadurch gekennzeichnet, daß die Befestigungsstrebe (20; 22, 24) die mindestens eine Solarzelle vom Fahrzeuginneren her verdeckt.

12. Belüftungsvorrichtung nach einem der Ansprüche 1 bis 11, dadurch gekennzeichnet, daß sich die Befestigungsstrebe (20; 22, 24) parallel zu der Fensteröffnung erstreckt.

13. Belüftungsvorrichtung nach einem der Ansprüche 1 bis 12, dadurch gekennzeichnet, daß sich die Befestigungsstrebe (20; 22, 24) innerhalb des Fensterrahmens erstreckt.

14. Belüftungsvorrichtung nach einem der Ansprüche 1 bis 13, dadurch gekennzeichnet, daß seitlich der Befestigungsstrebe (20; 22, 24) Flächen für freien Durchlaß von Licht oder Luft oder beiden in der Fensteröffnung vorhanden sind.

15. Belüftungsvorrichtung nach einem der Ansprüche 1 bis 14, dadurch gekennzeichnet, daß die Befestigungsstrebe (20; 22, 24) an einem Rahmen (5) des Fahrzeugdachfensters (2) festlegbar ist.

16. Belüftungsvorrichtung nach einem der Ansprüche 1 bis 15, dadurch gekennzeichnet, daß die Befestigungsstrebe (20; 22, 24) an dem Fahrzeugaufbau ortsfest festlegbar ist.

17. Belüftungsvorrichtung nach einem der Ansprüche 1 bis 16, dadurch gekennzeichnet, daß die mindestens eine Solarzelle parallel zur Ebene der Fensteröffnung angeordnet ist.

18. Belüftungsvorrichtung nach einem der Ansprüche 1 bis 17, dadurch gekennzeichnet, daß die mindestens eine Solarzelle im Bereich der Fensteröffnung selbst angeordnet ist.

19. Belüftungsvorrichtung nach einem der Ansprüche 1 bis 18, dadurch gekennzeichnet, daß das Fahrzeugdachfenster einfach verglast ist.

20. Belüftungsvorrichtung nach einem der Ansprüche 1 bis 19, dadurch gekennzeichnet, daß der Deckel (6) verschwenkbar oder verschiebbar oder verschwenk- oder verschiebbar ist.

21. Belüftungsvorrichtung nach einem der Ansprüche 1 bis 20, dadurch gekennzeichnet, daß eine aus der mindestens einen Solarzelle bestehende Solarzellenanordnung (14) lediglich einen Teilbereich unterhalb des Deckels (6) beansprucht.

## Claims

1. A ventilating device for a vehicle roof window having a transparent cover (6) which is adjustable between at least one open and one closed position, said device comprising at least one motor-driven fan (8, 4), at least one securing strut (20; 22, 24) for arranging the fan on the side of the cover facing the vehicle interior within the projection of the roof aperture accommodating the vehicle roof window and an energy source (14) for the fan motor (8), characterised in that the energy source is at least one solar cell and in that the at least one solar cell is or are arranged between the transparent cover (6) and the at least one securing strut (20; 22, 24).

2. A ventilating device according to claim 1, characterised in that the at least one solar cell is or are mounted on the at least one securing strut (20; 22, 24).

3. A ventilating device according to claim 1 or 2, characterised in that the at least one securing strut (20; 22, 24) comprises or comprise a flat grid-like structure forming ventilation openings (23).

4. A ventilating device according to claim 1 to 3, characterised in that at least one radiation protection screen (29) is mounted on the at least one securing strut (20; 22, 24).

5. A ventilating device according to claim 4, characterised in that the radiation protection screen (29) can be rolled onto a roller device (25).

6. A ventilating device according to one of claims 1 to 5, characterised in that the at least one securing strut (20; 22, 24), and the at least one fan (3, 4) form an integral assembly unit which can be detachably secured to the vehicle body (1).

7. A ventilating device according to one of claims 1 to 6, characterised in that the transparency of the transparent cover (6) is greater in the region of the at least one solar cell than in the other regions of the cover (6).

8. A ventilating device according to one of claims 1 to 7, characterised in that the energy supply to the fan motor (8) can be switched on and off.

9. A ventilating device according to one of claims 1 to 8, characterised in that the fan motor (8) can be optionally driven by means of electrical energy from the mains power supply of the vehicle.

10. A ventilating device according to one of claims 1 to 9, characterised in that the securing strut (20; 22, 24) is arranged in the longitudinal centre of the window aperture.

11. A ventilating device according to one of claims 1 to 10, characterised in that the securing strut (20; 22, 24) covers the at least one solar cell from the vehicle interior.

12. A ventilating device according to one of claims 1 to 11, characterised in that the securing strut (20; 22, 24) extends parallel to the window aperture.

13. A ventilating device according to one of claims 1 to 12, characterised in that the securing strut (20; 22, 24) extends within the window frame.

14. A ventilating device according to one of claims 1 to 13, characterised in that areas for the free passage of light or air or both are provided in the window aperture at the sides of the securing strut (20; 22, 24).

15. A ventilating device according to one of claims 1 to 14, characterised in that the securing strut (20; 22, 24) can be secured to a frame (5) of the vehicle roof window (2).

16. A ventilating device according to one of claims 1 to 15, characterised in that the securing strut (20; 22, 24) can be rigidly secured to the vehicle body.

17. A ventilating device according to one of claims 1 to 16, characterised in that the at least one solar cell is or are arranged parallel to the plane of the window aperture.

18. A ventilating device according to one of claims 1 to 17, characterised in that the at least one solar cell is or are arranged in the region of the window aperture per se.

19. A ventilating device according to one of claims 1 to 18, characterised in that the vehicle roof window si simply glazed.

20. A ventilating device according to one of claims 1 to 19, characterised in that the cover (6) is pivotable or slidable or pivotable and slidable.

21. A ventilating device according to one of claims 1 to 20, characterised in that a solar cell arrangement (14) formed by at least one solar cell cover only a partial area beneath cover (6).

**Revendications**

1. Dispositif de ventilation pour une fenêtre de toit de véhicule présentant un couvercle (6) translucide réglable entre au moins une position d'ouverture et une position de fermeture, fenêtre se composant d'au moins un ventilateur (8, 4) entraîné par un moteur, d'au moins un montant de fixation (20; 22, 24) destiné à disposer le ventilateur sur le côté du couvercle situé à l'intérieur du véhicule, dans la projection de l'ouverture de toit recevant la fenêtre de toit de véhicule et à disposer une source d'énergie (14) destinée au moteur du ventilateur (8), caractérisé en ce que la source d'énergie se compose d'au moins une pile solaire et en ce qu'au moins une pile solaire est disposée entre le couvercle translucide (6) et au moins un montant de fixation (20; 22, 24).

2. Dispositif de ventilation selon la revendication 1, caractérisé en ce qu'au moins une pile solaire est fixée sur au moins un montant de fixation (20; 22, 24).

3. Dispositif de ventilation selon la revendication 1 ou 2, caractérisé en ce qu'au moins un montant de fixation (20; 22, 24) présente une structure plane, formant des ouvertures d'aération (23), en grille.

4. Dispositif de ventilation selon 1, une des revendications 1 à 3, caractérisé en ce qu'au moins un écran de protection contre le rayonnement (29) est susceptible d'être fixé sur au moins un montant de fixation (20; 22, 24).

5. Dispositif de ventilation selon la revendication 4, caractérisé en ce que l'écran de protection contre le rayonnement (29) est enroulable sur un dispositif à store (25).

6. Dispositif de ventilation selon l'une des revendications 1 à 5, caractérisé en ce qu'au moins un montant de fixation (20; 22, 24) et au moins un ventilateur (3, 4) forment un groupe de construction d'une seule pièce susceptible d'être fixé de manière démontable sur la carrosserie du véhicule (1).

7. Dispositif de ventilation selon l'une des revendications 1 à 6, caractérisé en ce que la translucidité du couvercle translucide (6) est au moins plus élevée dans la zone d'une pile solaire que dans les zones restantes du couvercle (6).

8. Dispositif de ventilation selon l'une des revendications 1 à 7, caractérisé en ce que l'amenée d'énergie au moteur de ventilateur (8) est susceptible d'être connectée et déconnectée.

9. Dispositif de ventilation selon l'une des revendications 1 à 8, caractérisé en ce que le moteur de ventilateur (8) est susceptible d'être entraîné au choix à l'aide d'énergie électrique provenant du réseau de bord du véhicule.

10. Dispositif de ventilation selon l'une des revendications 1 à 9, caractérisé en ce que le montant de fixation (20; 22, 24) est disposé dans l'axe longitudinal de l'ouverture de fenêtre.

11. Dispositif de ventilation selon l'une des revendications 1 à 10, caractérisé en ce que le montant de fixation (20; 22, 24) recouvre au moins une pile solaire, depuis l'intérieur du véhicule.

12. Dispositif de ventilation selon l'une des revendications 1 à 11, caractérisé en ce que le montant de fixation (20; 22, 24), s'étend parallèlement à l'ouverture de toit.

13. Dispositif de ventilation selon l'une des revendications 1 à 12, caractérisé en ce que le montant de fixation (20; 22, 24) s'étend à l'intérieur du cadre de fenêtre.

14. Dispositif de ventilation selon l'une des revendications 1 à 13, caractérisé en ce que, latéralement au montant de fixation (20; 22, 24), il y a des surfaces destinées au passage libre de la lumière ou de l'air, ou des deux, dans l'ouverture de toit.

15. Dispositif de ventilation selon l'une des revendications 1 à 14, caractérisé en ce que le montant de fixation (20; 22, 24) est susceptible d'être fixé sur un cadre (5) de la fenêtre (2) de toit de véhicule.

16. Dispositif de ventilation selon l'une des revendications 1 à 15, caractérisé en ce que le montant de fixation (20; 22, 24) est susceptible d'être placé de manière fixe à la carrosserie du véhicule.

17. Dispositif de ventilation selon l'une des revendications 1 à 16, caractérisé en ce qu'au moins une pile solaire est disposée parallèlement au plan de l'ouverture de toit.

18. Dispositif de ventilation selon l'une des revendications 1 à 17, caractérisé en ce qu'au moins une pile solaire est disposée dans la zone même de l'ouverture de toit.

19. Dispositif de ventilation selon l'une des revendications 1 à 18, caractérisé en ce que la fenêtre de toit de véhicule est simplement vitrée.

20. Dispositif de ventilation selon l'une des revendications 1 à 19, caractérisé en ce que le couvercle (6) est pivotant ou coulissant ou pivotant et coulissant.

21. Dispositif de ventilation selon l'une des revendications 1 à 20, caractérisé en ce que l'agencement de piles solaires (14) se composant d'au moins une pile solaire qui occupe uniquement une zone partielle située au-dessous du couvercle (6).

Fig.1

Fig.2

# Fig.3